# DEMANDE DE BREVET EUROPEEN

(11) **EP 1 050 543 A1**
(43) Date de publication de la demande: **08.11.2000**
(21) Numéro de dépôt: 00401188.8
(22) Date de dépôt: 28.04.2000
(51) Int. Cl.: C08B 30/12, C08B 30/18

(54) **Procédé de transformation de matières amyplacées en phase sèche**

(30) Priorité: 03.05.1999 FR 9905604
(71) Demandeur: Roquette Frères, 62136 Lestrem (FR)
(72) Inventeur: Fuertes, Patrick, 59130 Lambersart (FR); Lambin, Anne, 59160 Lomme (FR); Dreux, Jean-Louis, 59940 Estaires (FR)
(74) Mandataire: Touati, Catherine

(57) **Abrégé**

L'invention a pour objet un procédé de transformation de matières amylacées comprenant une étape de fluidification chimique et une étape de stabilisation, simultanée ou non, ces deux étapes étant menées en phase sèche et par mise en oeuvre d'un acide organique polycarboxylique.

L'acide peut notamment être choisi parmi l'acide citrique, l'acide adipique, l'acide azélaïque et leurs mélanges.

Ce procédé est avantageusement mené à une température comprise entre 90°C et 170°C, à un pH inférieur à 4 et pendant une durée totale comprise entre 3 minutes et 8 heures.

La matière amylacée soumise à fluidification et stabilisation peut notamment être cationique.

## Description

La présente invention a pour objet un procédé de transformation de matières amylacées comprenant des étapes de fluidification chimique et de stabilisation menées en phase sèche. Elle vise également les matières amylacées transformées obtenues selon ce procédé, certaines de ces matières constituant par ailleurs de nouveaux produits industriels. Elle concerne enfin les utilisations industrielles de ces matières amylacées transformées.

Par « fluidification chimique », on entend ici toute opération consistant à soumettre une matière amylacée à l'action hydrolysante d'un agent chimique, par exemple un composé acide ou (per)oxydant, ledit agent pouvant être mis en oeuvre sous forme liquide, solide et/ou gazeuse.

Par « fluidification chimique en phase sèche » on entend ici une fluidification chimique telle que définie ci-avant, effectuée au sein d'un mélange réactionnel (matière amylacée y comprise) dont l'humidité est en pratique inférieure à 25 % environ, se situant préférentiellement entre 6 et 22 % environ.

Les techniques en phase sèche se distinguent des méthodes en milieu aqueux qui impliquent un milieu réactionnel beaucoup plus dilué, avec mise en oeuvre d'un lait d'amidon présentant une matière sèche ne dépassant généralement pas 35 à 40 %.

Ces méthodes de fluidification en milieu aqueux impliquent cependant la mise en oeuvre d'une étape supplémentaire de filtration qui présente l'inconvénient d'occasionner des pertes substantielles en matières solubles, principalement en granules d'amylacé abîmés, en molécules d'amylacé solubilisé et en sels générés lors de la neutralisation préalable de 1' amylacé fluidifié. Ceci se traduit à la fois par une diminution des rendements en matières amylacées fluidifiées et par une augmentation de la charge polluante des effluents.

Ces inconvénients ont contribué à la recherche et à la mise au point de techniques de fluidification chimique en phase sèche. Ainsi, les brevets US 3,479,220 et US 3,692,581 décrivent un procédé de fluidification chimique de matières amylacées (amidons, farines) par mise en contact, à température ambiante (≈ 25°C), de ces matières avec un acide minéral concentré mis sur un support inerte sec et finement divisé.

Le brevet EP 710.670 décrit un procédé de modification chimique en continu selon lequel une poudre d'amidon et un agent de modification, par exemple un agent hydrolysant comme l'acide chlorhydrique, sont introduits simultanément dans un réacteur particulier (« turboréacteur ») dont l'hélice permet, quasi instantanément, de créer par centrifugation une couche fluide, fine, dynamique et hautement turbulente d'un mélange intime entre les particules d'amidon et l'agent chimique.

La demande de brevet WO 97/13788 décrit, en termes généraux, un procédé de fluidification chimique d'amidons, effectué en phase sèche et en continu impliquant la mise en oeuvre obligatoire, entre autres, d'un réacteur de type piston (« plug flow reactor ») et de températures réactionnelles au plus égales à 77°C (170°F).

Selon ce brevet, une très large gamme d'agents chimiques à action hydrolysante sont préconisés, les agents préférés étant l'acide chlorhydrique, notamment sous forme gazeuse, et l'acide sulfurique. Cependant, aucun exemple précis de préparation d'un amidon fluidifié n'est réellement détaillé dans ce document.

En tout état de cause, qu'elles soient opérées en milieu aqueux ou en phase sèche, les techniques de fluidification chimique permettent de préparer des produits transformés présentant des propriétés physico-chimiques communément recherchées telles que :
- une viscosité intrinsèque et une viscosité à chaud diminuées, la viscosité à chaud pouvant être appréciée par la mesure classique de la fluidité dans l'eau (« Water Fluidity » ou WF),
- une solubilité à chaud augmentée, et
- une force de gel (« gel strength ») et une filmogénéité (« film strength ») augmentées.

L'un des principaux avantages technico-économiques des matières amylacées fluidifiées chimiquement consiste en leur aptitude à être mises en oeuvre et traitées, notamment à être cuites, à des matières sèches très élevées.

Ceci, du fait de leur viscosité largement abaissée en regard des produits natifs. Cette aptitude se traduit par des gains en énergie (moindres volumes d'eau à éliminer) et des avantages technologiques largement mis à profit dans l'industrie. Cependant, quel que soit leur procédé de préparation, les matières amylacées fluidifiées chimiquement présentent généralement l'inconvénient de donner lieu à des colles peu stables et notamment à des colles présentant une augmentation très significative de viscosité lors d'un refroidissement et/ou lors d'un stockage prolongé. Cette instabilité se manifeste souvent par un phénomène irréversible de gélification ou de rétrogradation.

C'est pourquoi on associe généralement les techniques de fluidification chimique à des réactions de stabilisation, et notamment à des réactions d'éstérification, d'éthérification ou d'oxydation, en vue de rendre les matières amylacées fluidifiées applicables industriellement. Il peut s'agir notamment de réactions d'acétylation, d'hydroxypropylation ou d'oxydation par l'eau de javel. Ces techniques bien qu'efficaces ont l'inconvénient de générer une forte pollution organique et/ou saline. D'autres moyens visent à associer les techniques de fluidification chimique à des réactions de réticulation.

Ainsi le brevet US 3,705,046 décrit la réticulation, en phase aqueuse, d'un amidon, natif ou cationique, par mise en oeuvre de paraformaldéhyde et ce, simultanément ou antérieurement à sa fluidification par l'acide chlorhydrique. L'amidon réticulé/fluidifié obtenu est présenté comme ayant une très bonne stabilité et pouvant être avantageusement utilisé pour le surfaçage des fibres textiles ou papetières.

Le brevet US 3,661,895 décrit la préparation, aux mêmes fins, d'un amidon successivement fluidifié, réticulé puis traité par un anhydride d'acide polycarboxylique, l'ensemble des opérations étant effectuées en milieu aqueux.

Les brevets US 3,778,431 ET 3,884,909 décrivent la réticulation, en phase aqueuse, d'un amidon de maïs natif ou cationique par mise en oeuvre d'un agent réticulant tel que le 1,3-dichloro-2-propanol, le 1,4-dichlorobutène-2 ou l'épichlorhydrine et ce, antérieurement à sa fluidification par l'acide chlorhydrique, également en milieu aqueux.

Cependant, de tels procédés présentent, voire accentuent, les inconvénients précités inhérents aux techniques en phase aqueuse (diminution des rendements, augmentation des charges polluantes).Ces procédés ont également le désavantage d'être complexes et d'impliquer notamment la mise en oeuvre de deux agents différents, à savoir un agent fluidifiant et un agent réticulant et ce, généralement, lors de deux étapes différentes, elles mêmes séparées par des traitements intermédiaires.

Pour leur part, les brevets EP 710.670 et WO 97/13788 précités, beaucoup plus récents, ne s'intéressent pas spécifiquement à l'association d'une étape de fluidification et d'une étape de réticulation si ce n'est que le document WO 97/13788 mentionne, de manière aucunement détaillée la possibilité que l'amidon soumis à la fluidification (« starch source ») ait été préalablement modifié par des agents tels que l'épichlorhydrine ou l'oxychlorure de phosphore (cf. page 3, lignes 9-25 dudit document).

Il résulte de ce qui précède qu'il n'existe pas, à la connaissance de la Demanderesse, de moyen de préparation d'une matière amylacée fluidifiée et stabilisée, moyen qui simultanément :
- soit simple et notamment n'implique pas la mise en oeuvre obligatoire de plusieurs agents et/ou de plusieurs étapes de modification chimique,
- Permette la préparation industrielle de produits présentant une bonne stabilité au refroidissement et/ou lors d'un stockage prolongé,
- soit applicable à des matières amylacées de natures très diverses ou destinées à subir subséquemment des modifications, chimiques ou physiques, très diverses,
- soit économique et notamment permette d'atteindre de bons rendements en matières amylacées fluidifiées, et
- soit peu ou non polluant et notamment n'occasionne pas de pertes substantielles en matières solubles au niveau des effluents.

Et le mérite de la Société Demanderesse est d'avoir trouvé, après de nombreuses études, qu'un tel moyen pouvait consister en l'association particulière d'une étape de fluidification et d'une étape de stabilisation, les deux étapes étant menées chacune a) en phase sèche et b) par mise en oeuvre d'un agent choisi parmi les acides organiques polycarboxyliques.

De façon plus précise la présente invention a pour objet un procédé de transformation d'une matière amylacée caractérisé en ce qu'il comprend :
- une étape de fluidification chimique au cours de laquelle la matière amylacée est soumise, en phase sèche, à l'action hydrolysante d'un agent choisi parmi les acides organiques polycarboxyliques et leurs mélanges de telle sorte que ladite matière amylacée présente une fluidité dans l'eau (WF) au moins égale à 10, de préférence au moins égale à 45, et
- une étape de stabilisation, simultanée ou non à ladite étape de fluidification, au cours de laquelle la matière amylacée est soumise, également en phase sèche, à l'action stabilisante d'un agent également choisi parmi les acides organiques polycarboxyliques et leurs mélanges.

Par « étape de stabilisation » on entend notamment tout moyen ou procédé, physique et/ou chimique, apte à améliorer la stabilité au refroidissement et/ou au stockage de la matière amylacée, en particulier apte à réticuler, peu ou prou, ladite matière.

Selon une variante avantageuse, ce procédé est caractérisé en ce que chacun des agents utilisés lors des étapes de fluidification et de stabilisation est choisi parmi les acides organiques dicarboxyliques, les acides organiques tricarboxyliques et les mélanges quelconques d'au moins deux quelconques desdits acides, de préférence choisi parmi l'acide citrique, les acides de formule générale HOOC-(CH₂)ₙ-COOH pour lesquels n est compris entre 3 et 8 et mélanges quelconques d'au moins deux quelconques des acides précités.

Il peut s'agir notamment de l'acide adipique (n = 4), de l'acide azélaïque (n = 7), de l'acide subérique (n = 6) ou de l'acide sébacique (n = 8).

Ce procédé permet, par exemple lorsque l'on utilise des acides organiques tels que les acides citrique, adipique ou azélaïque, d'obtenir une matière amylacée simultanément stabilisée et substantiellement fluidifiée et ce, par mise en oeuvre d'un unique agent de transformation.

En suite de quoi le procédé objet de l'invention peut également être caractérisé en ce que la matière amylacée est soumise simultanément aux étapes de fluidification et de stabilisation par l'action de l'acide citrique, de l'acide adipique, de l'acide azélaïque, de l'acide subérique, de l'acide sébacique ou d'un mélange quelconque de deux au moins de ces acides.

Au sens de la présente invention le terme « simultanément » ne doit pas être considéré comme restrictif mais comme excluant uniquement le cas de figure selon lequel l'étape de fluidification d'une part et l'étape de stabilisation d'autre part ne connaîtraient aucune contemporanéité, ne serait-ce que de quelques minutes. Ce terme « simultanément » inclus les cas de figure selon lesquels :
- les deux étapes débutent en même temps mais l'une se termine avant l'autre, ou
- les deux étapes ne débutent pas en même temps mais se terminent en même temps, ou
- l'une étape se déroule entièrement après que l'autre ait débuté mais avant que l'autre ne se termine, ou
- l'une étape débute après que l'autre ait débuté mais avant que l'autre ne se termine.

Il a déjà été préconisé de stabiliser, par estérification ou réticulation, un amidon par usage, respectivement :
- en phase aqueuse, de sels d'ammonium de l'acide citrique, comme décrit dans le brevet US 2,868,780, ou
- en phase sèche, de sels de sodium ou de calcium de l'acide citrique, éventuellement générés in situ dans le milieu réactionnel, comme décrit par H. KLAUSHOFER et al dans « Die Stärke 30 (1978) N° 2, pp 47-51 ».

Ces procédés sont menés de manière caractéristique à des pH réactionnels relativement élevés, en tous cas au moins égaux à 4, du fait que les auteurs visent tout particulièrement à minimiser, si possible éviter totalement, toute hydrolyse de l'amidon. En outre ces procédés impliquent la mise en oeuvre de quantités relativement élevées des sels précités, à savoir généralement supérieures à 5 %, exprimées en acide citrique / amidon (sec / sec).

Il résulte d'un article subséquent de H. KLAUSHOFER (« Die Stàrke 35 (1983) N° 7, pp 237-242 ») que de tels produits peuvent présenter des teneurs en acide citrique fixé de l'ordre de 1,33 à 3,18 %.

Plus récemment il a été décrit par E.WING et al (« Die Stärke 48 (1996) N° 7/8, pp 257-279 »), la préparation de citrates d'amidon utilisables comme échangeurs d'ions et ce, dans des conditions visant à optimiser le rendement de fixation de l'acide citrique tout en minimisant les phénomènes non souhaités, d'une part de réticulation et d'autre part d'hydrolyse. Il est préconisé d'ajuster le pH à une valeur de 8,3 en vue d'éviter toute fluidification de l'amidon et d'ajuster la température à une valeur inférieure à 140°C pour en limiter toute réticulation.

A la connaissance de la Demanderesse il n'a jamais été décrit ni même suggéré d'utiliser, notamment en phase sèche, un acide pour permettre à la fois la fluidification substantielle et la stabilisation de la matière amylacée.

Par « fluidification substantielle » on entend ici un traitement apte à conférer a la matière amylacée une valeur de fluidité dans l'eau (WF) au moins égale à 10 environ, de préférence au moins égale à 45 environ. La notion de « stabilisation » a été définie précédemment. De manière avantageuse, cette stabilisation doit permettre de diminuer l' «indice S » de la matière amylacée tel qu'il sera défini ci-après et, si possible, d'atteindre des valeurs au plus égales à 10 pour ledit indice lorsqu'il est mesuré sur des matières amylacées fluidifiées présentant une WF comprise entre 60 et 90 environ.

Cette double modification, simultanée ou non, de la matière amylacée par fluidification substantielle et stabilisation était d'autant moins évidente qu'il est connu, y compris de l'état de la technique précité, que chacune de ces modifications demande des conditions de milieu (notamment de température, de pH, d'humidité et de concentration en acide) différentes, voire antinomiques, pour pouvoir avoir lieu substantiellement.

Selon une variante du procédé conforme à l'invention, celui-ci est caractérisé en ce que l'on met en oeuvre, en vue de la fluidification et de la stabilisation de la matière amylacée, une quantité totale d'acide(s) organique(s) polycarboxylique(s) comprise entre environ 0,05 et environ 5 %, de préférence entre 0,5 et 4 %, ces pourcentages étant exprimés en poids sec d'acide(s) organique(s) polycarboxylique(s) par rapport au poids sec de matière amylacée.

Les acides peuvent être mis en oeuvre aussi bien sous forme solide que liquide, plus ou moins concentrée.

A titre d'exemples, l'acide adipique peut, du fait de sa faible solubilité dans l'eau, être mélangé à sec à la matière amylacée et l'acide citrique être pulvérisé sur ladite matière sous la forme d'une solution aqueuse à 50 % environ. Il convient seulement que l'eau éventuellement apportée par l'acide mis en solution le soit en quantité suffisamment faible pour que le milieu réactionnel reste une phase sèche au sens de l'invention.

De manière avantageuse le procédé ici revendiqué est caractérisé en ce que les étapes de fluidification et de stabilisation sont menées :
- à une température comprise entre environ 90°C et environ 170°C, de préférence comprise entre 100°C et 150°C, et
- pendant une durée totale comprise entre environ 3 minutes et environ 8 heures, de préférence comprise entre 5 minutes et 6 heures.

Par « matière amylacée » au sens de la présente invention, on entend l'ensemble des amidons natifs, d'origine naturelle ou hybride, y compris ceux issus de mutations ou manipulations génétiques, ainsi que l'ensemble des amidons modifiés issus de la modification chimique et/ou physique, en une ou plusieurs étapes, desdits amidons natifs. Les amidons, natifs ou modifiés, peuvent notamment être issus de pomme de terre, de pomme de terre à haute teneur en amylopectine (pomme de terre waxy), de maïs, de blé, de maïs à haute teneur en amylose, de riz, de pois ou de manioc, des coupes ou fractions qui peuvent être faites ou obtenues telles que l'amylose, l'amylopectine, les coupes granulométriques connues de l'homme de l'art sous les vocables d'amidon de blé « A » et amidon de blé « B », et les mélanges quelconques d'au moins deux quelconques des produits susmentionnés. Les matières amylacées utilisables selon l'invention peuvent également consister en des farines ou autres mélanges contenant amidon(s) et protéine(s) végétale(s), le composant « amidon(s) » étant majoritaire, ainsi que l'ensemble des produits issus de la modification chimique et/ou physique, en une ou plusieurs étapes, desdites farines et desdits mélanges.

Selon une variante, le procédé de transformation de matières amylacées selon l'invention est caractérisé en ce que la matière amylacée soumise aux étapes, éventuellement simultanées, de fluidification chimique et de stabilisation est choisi parmi les amidons natifs et les farines ainsi que les produits résultant de l'éthérification, de l'estérification, de la sulfonation, de l'oxydation et/ou de la plastification, et en particulier de la cationisation, de l'hydroxyalkylation ou de l'acétylation, desdits amidons et desdites farines.

La Société Demanderesse a notamment constaté que ladite matière amylacée pouvait avantageusement être constituée d'un amidon cationique.

Selon une autre variante le procédé selon l'invention est caractérisé en ce que les étapes de fluidification et de stabilisation sont menées à un pH inférieur à 4,0 environ, de préférence compris entre 1,5 et 3,5.

De tels pH constituent une autre caractéristique dudit procédé se distinguant fondamentalement de ceux décrits dans le brevet US 2,868,780 et les articles de KLAUSHOFER et WING précités.

Le procédé selon l'invention présente par ailleurs l'intérêt de pouvoir être mené sur des dispositifs non spécifiques et notamment des réacteurs agités ou de type piston présentant des géométries, dimensions et modes de fonctionnement très divers, y compris ceux décrits dans les brevets EP 710 670 et WO 97/13788 susmentionnés.

En suite de quoi, on dispose désormais d'un nouveau moyen particulièrement simple, peu coûteux et performant d'obtention de matières amylacées fluidifiées et stabilisées présentant de larges gammes de propriétés physico-chimiques et applicatives.

Ces matières amylacées présentent généralement un « indice S » relativement faible, à savoir au plus égal à 10 environ, ledit indice étant inversement proportionnel à la stabilité au refroidissement desdites matières. De manière plus précise l'indice S d'une matière amylacée est égal au rapport entre la viscosité BROOKFIELD à 20°C et 100 tours par minute (ci-après « V 20°C ») et la viscosité à 80°C et 100 tours par minute (« V 80°C ») de la matière amylacée se présentant sous forme d'une colle à 15 % de matière sèche (MS), obtenue à partir d'une suspension présentant une MS initiale de 25 %, cuite pendant 3 minutes au jet-cooker à 145°C et diluée à 15 % de MS.

Le procédé de transformation selon l'invention permet, entre autres, d'obtenir des produits qui présentent simultanément :
- une fluidité dans l'eau (WF) comprise entre environ 50 et environ 90, et
- un indice S tel que défini ci-avant, au plus égal à 10 environ.

Il permet tout particulièrement de transformer des matières amylacées autres que des amidons de maïs waxy natifs en des produits présentant simultanément
- une fluidité dans l'eau (WF) comprise entre environ 65 et environ 90, et
- un indice S compris entre environ 2 et 7.

A la connaissance de la Demanderesse des produits obtenus en phase sèche et ainsi caractérisés constituent de nouveaux produits industriels qui peuvent avantageusement être utilisés dans les opérations de couchage ou de surfaçage du papier, d'encollage ou d'apprêtage textile et ce, notamment en tant qu'agents filmogènes, liants, fixateurs de fibres et/ou rétenteurs d'eau. Ces nouvelles matières amylacées fluidifiées / stabilisées peuvent également être mises en oeuvre comme agents texturants, en particulier viscosifiants ou épaississants, dans la préparation de gommes ou produits gélifiés alimentaires, pharmaceutiques ou cosmétiques ou encore comme agents adhésifs dans la fabrication de plaques de plâtres ou de carton ondulé.

Du fait des conditions de sa mise en oeuvre, en particulier de la nature et de la quantité de l'acide utilisé, de l'humidité et du pH du milieu réactionnel, le procédé selon l'invention permet également d'obtenir des produits présentant simultanément une fluidité dans l'eau (WF) relativement élevée, i.e au moins égale à 45 environ et une teneur en acide(s) organique(s) polycarboxylique(s) fixé(s) relativement basse, i.e au plus égale à environ 1 %, exprimée en poids sec d'acide(s) organique(s) polycarboxylique(s), sous forme acide et/ou sel(s), sur le poids sec de la matière amylacée.

A la connaissance de la Demanderesse, des produits ainsi caractérisés constituent également de nouveaux produits industriels et ce, indépendamment du procédé utilisé pour leur obtention. Ils peuvent être avantageusement utilisés dans les fonctions et applications citées ci-dessus.

En suite de quoi, la présente invention a également pour objet une nouvelle matière amylacée caractérisée en ce qu'elle présente simultanément :
- une fluidité dans l'eau (WF) au moins égale à 45 environ, de préférence comprise entre 50 et 90, et
- une teneur en acide(s) organique(s) polycarboxylique(s) fixé(s) comprise entre environ 0,01 % et environ 1 %, de préférence comprise entre 0,05 % et 0,9 %.

L'ensemble des matières amylacées décrites ci-avant peuvent, en outre, être avantageusement cationiques (y compris amphotères) et présenter, par exemple, un taux d'azote fixé compris entre environ 0,1 et 3 % (sec / sec).

La présente invention va être décrite de façon encore plus détaillée à l'aide des exemples qui suivent et qui ne sont aucunement limitatifs.

### Exemple 1 :

Dans cet exemple on transforme une matière amylacée native selon le procédé objet de l'invention par mise en oeuvre, en phase sèche, d'acide citrique en tant qu'acide organique polycarboxylique.

Dans un mélangeur à haute vitesse, on introduit 40 kg d'un amidon de maïs natif présentant une humidité de 13 % d'eau ainsi que 700 g environ d'une solution à 50 % d'acide citrique de sorte que le ratio pondéral, en sec / sec, de l'acide citrique par rapport à l'amidon est de 1 % environ.

Le mélange acidifié obtenu (pH < 3) est déshydraté à une valeur d'humidité d'environ 8 % puis introduit dans un réacteur agité de type LODIGE chauffé à une température de 115°C - 120°C environ. Après 50 minutes de réaction le produit transformé obtenu est extrait du réacteur et neutralisé avec une solution de carbonate de sodium, opération qui permet, en outre, audit produit de retrouver son taux d'humidité initial.

La mesure de la fluidité dans l'eau (WF) de ce produit donne une valeur de 72, ce qui traduit une fluidification très substantielle de la matière.

La stabilité de ce produit a été vérifiée par étude, à différentes températures, de la viscosité BROOKFIELD (vitesse de rotation : 100 tours par minute) d'une colle à 15 % de matière sèche (MS) obtenue à partir d'une suspension à 25 % de MS initiale cuite 3 minutes au jet-cooker (145°C) et diluée.

Les résultats obtenus montrent une très grande stabilité de ce produit dont la viscosité augmente de manière régulière et limitée entre 80°C (viscosité = 52 mPa.s)et 20°C (620 mPa.s).

Dans les mêmes conditions de préparation et d'évaluation de colle, un amidon de maïs fluidifié par HCl en phase lait (WF ≈ 80) mais non stabilisé montre une forte augmentation de viscosité entre 80°C (45 mPa.s) et 20°C (5300 mPa.s).

Par ailleurs, un essai de traitement, à 55°C et en phase aqueuse, d'un amidon de maïs (lait à 37,5 % de MS) par 5 % d'acide citrique (sec /sec), a montré qu'il n'était pas possible, même après 26 heures de réaction, d'obtenir un produit présentant une fluidité dans l'eau (WF) au moins égale à 35.

Ce produit ne possède pas de fonctions citrates fixées alors que le produit susdécrit, obtenu conformément à l'invention, présente une teneur en acide citrique, fixé sous forme de sels, de 0,35 %, exprimé en acide citrique sec / poids sec de produit.

Cet EXEMPLE 1 montre que le procédé selon l'invention permet, de manière simple et peu coûteuse, de stabiliser et de fluidifier très substantiellement une matière amylacée native et ce, par mise en oeuvre d'une quantité relativement faible d'un unique agent chimique, en l'occurrence de 1 % d'acide citrique.

### EXEMPLE 2 :

Dans cet exemple, on transforme un amidon de maïs natif selon le procédé objet de l'invention par réaction en phase sèche avec, respectivement :
- ESSAI A : 2,5 % d'acide citrique (sec / sec) pendant 20 minutes à 102 °C environ,
- ESSAI B : 2,5 % d'acide citrique (sec / sec) pendant 30 minutes à 102°C environ,
- ESSAI C : 2,5 % d'acide adipique* (sec / sec) pendant 2 heures 30 minutes à 127°C environ,
- ESSAI D ; 2,5 % d'acide adipique * (sec / sec) pendant 5 heures à 127°C environ.

* mis en oeuvre sous forme poudre.

Des essais témoins sont réalisés par fluidification, en phase sèche et par HCl, d'un amidon de maïs préalablement réticulé, en phase lait, par mise en oeuvre de 0,6 % de trimétaphosphate de sodium (« TMPS »).Cette fluidification se fait par réaction avec, respectivement ;
- ESSAI T1 : 0,13 % d'acide chlorhydrique (sec / sec) pendant 30 minutes à 72°C environ,
- ESSAI T2 : 0,13 % d'acide chlorhydrique (sec / sec) pendant 45 minutes à 72°C environ.

On mesure la fluidité dans l'eau (WF), la viscosité à 20°C et à 80°C des produits obtenus et ce, conformément à l'EXEMPLE 1, ainsi que le rapport V 20°C / V 80°C ou indice S tel que défini ci-avant.

Les résultats sont repris ci-dessous.

| ESSAI | WF | V 20°C | V 80°C | INDICE S |
|---|---|---|---|---|
| T1 | 67 | 7300 | 80 | >90 |
| T2 | 76 | 1560 | 51 | 30,6 |
| A | 67 | 250 | 58 | 4,3 |
| B | 75 | 224 | 52 | 4,3 |
| C | 61 | 620 | 70 | 8,9 |
| D | 77 | 164 | 47 | 3,5 |

Ces résultats montrent globalement qu'à niveau de fluidification à peu près identique, les matières amylacées transformées selon l'invention présentent une stabilité au refroidissement très supérieure à celle mesurée pour des amidons traités par un agent classique de réticulation tel que le TMPS.

L'acide adipique se révèle être, comme l'acide citrique, un agent de fluidification et de stabilisation très performant en phase sèche.

### EXEMPLE 3 :

Dans cet exemple on transforme un amidon de maïs cationique(cationisation en phase lait) présentant un taux d'azote fixé de 0,16 % environ par réaction, en phase sèche, avec 1,0 % d'acide citrique monohydrate (sec / sec) pendant 65 minutes à 125°C environ.

L'amidon de maïs fluidifié / stabilisé obtenu présente les caractéristiques suivantes, mesurées comme indiqué ci-avant :
- WF : 67
- V 20°C : 304 mPa.s
- V 80°C : 71 mPa.s
- Indice S : 4,3

Dans un essai témoin on fluidifie, en phase lait, le même amidon de maïs cationique, mais par réaction avec 1,0 % d'acide chlorhydrique (sec / sec) pendant 510 minutes à 52°C environ.

La matière amylacée transformée obtenue présente les caractéristiques suivantes :
- WF : 68
- V 20°C : 1000 mPa.s
- V 80°C : 64 mPa.s
- INDICE S : 15,6

Ces résultats montrent que le procédé selon l'invention est particulièrement bien adapté à la transformation d'amidons cationiques. Ils confirment qu'à niveaux de cationisation et de fluidification égaux, une matière amylacée obtenue selon l'invention présente une stabilité au refroidissement significativement plus élevée que celle mesurée pour la même matière originelle mais traitée par un agent classique de fluidification comme HCl.

### EXEMPLE 4 :

Dans cet exemple, on transforme un amidon de maïs natif selon le procédé décrit dans l'exemple 1 si ce n'est que :
1. l'amidon est mélangé avec 2,5% en poids (sec/sec) d'acide citrique et 0,04% en poids (sec/sec) d'acide chlorhydrique,
2. le mélange acidifié ainsi obtenu est transformé, sans déshydratation préalable, dans un réacteur de type turbo-sécheur tel que décrit dans le brevet EP 710 670 précité,
3. la température du fluide thermique est de 150°C, et
4. la durée réactionnelle est de 3 minutes environ. Le produit ainsi obtenu présente une fluidité dans l'eau (WF) de 72 et un indice S de 3,5.

En outre, ce produit présente une remarquable stabilité au stockage. Stocké 24 heures à 25°C, il ne gélifie pas et 24 heures à 50°C, il n'augmente pas significativement de viscosité.

Cet exemple montre que le procédé selon l'invention peut avantageusement être mené en présence également d'une faible quantité d'acide fort tel que l'acide chlorhydrique.

## Revendications

1. Procédé de transformation d'une matière amylacée caractérisé en ce qu'il comprend :
- une étape de fluidification chimique au cours de laquelle la matière amylacée est soumise, en phase sèche, à l'action hydrolysante d'un agent choisi parmi les acides organiques polycarboxyliques et leurs mélanges, de telle sorte que ladite matière amylacée présente une fluidité dans l'eau (WF) au moins égale à 10, de préférence au moins égale à 45, et
- une étape de stabilisation, simultanée ou non à ladite étape de fluidification, au cours de laquelle la matière amylacée est soumise, également en phase sèche, à l'action stabilisante d'un agent également choisi parmi les acides organiques polycarboxyliques et leurs mélanges.

2. Procédé selon la revendication 1 caractérisé en ce que chacun des agents utilisés lors des étapes de fluidification et de stabilisation est choisi parmi les acides organiques dicarboxyliques, les acides organiques tricarboxyliques et les mélanges quelconques d'au moins deux quelconques desdits acides, de préférence choisi parmi l'acide citrique, les acides de formule générale HOOC-(CH₂)ₙ-COOH pour lesquels n est compris entre 3 et 8 et leurs mélanges quelconques.

3. Procédé selon l'une quelconque des revendications 1 et 2 caractérisé en ce que la matière amylacée est soumise simultanément aux étapes de fluidification et de stabilisation par l'action de l'acide citrique, de l'acide adipique, de l'acide azélaïque, de l'acide subérique, de l'acide sébacique ou d'un mélange quelconque de deux au moins de ces acides.

4. Procédé selon l'une quelconque des revendications 1 à 3 caractérisé en ce que l'on met en oeuvre, en vue de la fluidification et de la stabilisation de la matière amylacée, une quantité totale d'acide(s) organique(s) polycarboxylique(s) comprise entre environ 0,05 et environ 5 %, de préférence entre 0,5 et 4 %, ces pourcentages étant exprimés en poids sec d'acide(s) organique(s) polycarboxylique(s) par rapport au poids sec de matière amylacée.

5. Procédé selon l'une quelconque des revendications 1 à 4 caractérisé en ce que les étapes de fluidification et de stabilisation sont menées :
- à une température comprise entre environ 90°C et environ 170°C, de préférence comprise entre 100°C et 150°C, et
- pendant une durée totale comprise entre environ 3 minutes et environ 8 heures, de préférence comprise entre 5 minutes et 6 heures.

6. Procédé selon l'une quelconque des revendications 1 à 5 caractérisé en ce que les étapes de fluidification et de stabilisation sont menées à un pH inférieur à 4,0 environ, de préférence compris entre 1,5 et 3,5.

7. matière amylacée autre qu'un amidon de maïs waxy natif, fluidifiée en phase sèche, caractérisée en ce qu'elle présente simulténément :
- une fluidité dans l'eau (WF) comprise entre environ 65 et environ 90, et
- un indice S compris entre environ 2 et environ 7.

8. matière amylacée caractérisée en ce qu'elle présente simultanément :
- une fluidité dans l'eau (WF) au moins égale à 45 environ, de préférence comprise entre 50 et 90, et
- une teneur en acide(s) organique(s) polycarboxylique(s) fixé(s), comprise entre environ 0,01 % et environ 1 %,de préférence comprise entre 0,05 % et 0,9 %, ces pourcentages étant exprimés en poids sec d'acide(s) organique(s) polycarboxylique(s) fixé(s), sous forme acide et/ou sel(s), sur le poids sec de la matière amylacée.

9. matière amylacée selon l'une quelconque des revendications 7 et 8 ou obtenue selon l'une quelconque des revendications 1 à 6, caractérisée en ce qu'elle est cationique.

10. Utilisation d'une matière amylacée selon l'une quelconque des revendications 7 à 9 ou obtenue selon l'une quelconque des revendication 1 à 6, comme agent filmogène, liant, fixateur de fibres et/ou rétenteur d'eau dans les opérations de couchage ou de surfaçage du papier, d'encollage ou d'apprêtage textile, comme agent texturant, en particulier viscosifiant ou épaississant, dans la préparation de gommes ou produits gélifiés alimentaires, pharmaceutiques ou cosmétiques ou comme agent adhésif ou texturant dans la fabrication de plaques de plâtre ou de carton ondulé.
